# EUROPÄISCHE PATENTSCHRIFT

(11) **EP 1 025 132 B1**
(45) Veröffentlichungstag und Bekanntmachung des Hinweises auf die Patenterteilung: **03.03.2004**
(21) Anmeldenummer: 98961104.1
(22) Anmeldetag: 27.10.1998
(51) Int. Cl.: C08F 2/42

(54) **VERFAHREN UND LÖSUNG ZUR SOFORTBEENDIGUNG VON RADIKALISCHEN POLYMERISATIONEN**
METHOD AND SOLUTION FOR IMMEDIATE TERMINATION OF RADICAL POLYMERISATION
PROCEDE ET SOLUTION POUR TERMINER INSTANTANEMENT DES POLYMERISATIONS RADICALAIRES

(30) Priorität: 29.10.1997 US 960356
(43) Veröffentlichungstag der Anmeldung: 09.08.2000
(73) Patentinhaber: BASF AKTIENGESELLSCHAFT, 67056 Ludwigshafen (DE)
(72) Erfinder: FRIED, Michael, D-69121 Heidelberg (DE); NESTLER, Gerhard, D-67061 Ludwigshafen (DE); KAGELER, Paul, Leon, Lake Jackson, TX 77566 (US); JAMES, Lawrence, Edwin, Grosse Ile, MI 48138 (US)
(86) Internationale Anmeldenummer: PCT/EP1998/006814
(87) Internationale Veröffentlichungsnummer: WO 1999/021893

(56) Entgegenhaltungen:
- EP-A- 0 200 181
- DATABASE WPI Week 9402 Derwent Publications Ltd., London, GB; AN 94012301 XP002101861 "PREVENTION OF POLYMERISATION OF (METH)ACRYLIC ACID - BY TREATMENT WITH N-OXYL COMPOUND AND PHENOTHIAZINE, AROMATIC AMINE OR PHENOLIC COMPOUND." & JP 53 202217 A (KURARAY CO. LTD.) , 3. Dezember 1993 in der Anmeldung erwähnt

## Beschreibung

Vorliegende Erfindung betrifft ein Verfahren zur Sofortbeendigung radikalischer Polymerisationen. Einmal ausgelöst, verlaufen radikalische Polymerisationen normalerweise ausgeprägt exotherm, d.h., unter starker Wärmeentwicklung, wobei die freigesetzte Polymerisationswärme, für den Fall, daß sie nicht abgeführt wird, die radikalische Polymerisation zusätzlich beschleunigt.

Erfolgt bei gewollten radikalischen Polymerisationen vorgenannte Wärmeabfuhr in mangelhafter Weise, besteht daher die Gefahr, daß die Polymerisation so heftig verläuft, daß das das Polymerisaticnsgemisch enthaltende Gefäß exploäiert, wenn der außer Kontrolle geratenen Polymerisation (z.B. eine radikalische Substanz-, Lösungs-, Emulsions- oder Suspensionspolymerisation von wenigstens eine ethylenisch ungesättigte Gruppe aufweisenden Verbindungen (Monomeren)) nicht entgegengetreten wird.
Ein solches wirksames Entgegentreten wird insbesondere aber auch in Fall von ungewollt ausgelösten radikalischen Polymerisationen benötigt. Ungewollt ausgelöste radikalische Polymerisationen können z.B. bei der Lagerung und/oder beim Transport von Monomere enthaltenden Substanzen auftreten, da sowohl wärme als auch Licht oder unerwünschte Radikale eine radikalische Polymerisation von Monomeren auslösen können. Zwar versucht man solchen ungewollten radikalischen Polymerisationen üblicherweise dadurch präventiv entgegenzutreten, daß man den Monomeren geringe Mengen (in der Regel bis zu 1000 Gew.-ppm) an Inhibitoren radikalischer Polymerisationen (Radikalfänger, Polymerisationsinhibitoren) zusetzt. Deren inhibierende Wirkung darf jedoch nicht zu ausgeprägt sein, da sie sonst vor einer späteren Verwendung der Monomeren für radikalisch initiierte Polymerisationszwecke wieder abgetrennt werden müßten. Eine mäßig inhibierende Wirkung, wie sie z.B. der Monomethylether des Hydrochinon (MEHQ) aufweist, kann von radikalischen Polymerisationsinitiatoren jedoch normalerweise dominiert werden, weshalb MEHQ ein für Monomere besonders häufig angewandter Lager- und/oder Transportstabilisator ist. Die Erfahrung hat jedoch gezeigt, daß selbst bei mit Lager- und/oder Transportstabilisatoren stabilisierten Monomeren eine ungewollte radikalische Polymerisation derselben nicht völlig ausgeschlossen werden kann. Letzteres gilt insbesondere dann, wenn es sich bei den Monomeren um die radikalisch besonders polymerisationsfreudigen (Meth)acrylmonomeren und/oder Styrol handelt.

Unter dem Begriff (Meth)acrylmonomere sollen hier Substanzen verstanden werden, die aus Acrolein, Methacrolein, Acrylsäure, Methacrylsäure und/oder aus Estern der beiden vorgenannten Säuren bestehen. (Meth)acryl wird in dieser Schrift generell als verkürzte Schreibweise für Acryl - und/oder Methacryl - verwendet.

Vor allem Substanzen, die zu wenigstens 90 Gew.-% aus (Meth)acrylmonomeren und/oder Styrol bestehen, sind bezüglich einer ungewollten radikalischen Polymerisation gefährdet (dies gilt auch bei präventivem Polymerisationsinhibitorzusatz). Dies trifft vor allem dann zu, wenn solche Substanzen beim Transport und/oder bei der Lagerung extremen äußeren Bedingungen ausgesetzt sind (z.B. extrem hohen Temperaturen beim Transport via Schiff über verschiedene Klimazonen hinweg (z.B. über den Äquator), wie es z.B. beim Transport von Europa nach Südostasien der Fall ist, oder extrem tiefen Temperaturen wie bei der Lagerung in außenliegenden Tanks in nordischen Ländern). Insbesondere tiefe Temperaturen sind nicht unbedenklich, können sie doch in Extremfällen zur partiellen oder vollständigen Kristallisation der Monomeren führen. Letzteres bedingt normalerweise eine Entmischung von Monomeren und Stabilisator ("kristallisative Reinigung"), was dazu führen kann, daß bei einem späteren Schmelzen für eine gewisse Zeitdauer nichtstabilisierte Bezirke von Monomeren vorliegen, von denen mit erhöhter Wahrscheinlichkeit eine ungewollte radikalische Polymerisation ausgehen kann.

Für einen sicheren Transport und/oder eine sichere Lagerung von Monomere enthaltenden Substanzen bedarf es daher eines Verfahrens, das in der Lage ist, eine ungewollt ausgelöste radikalische Polymerisation der Monomeren möglichst rasch zu beenden. Ein solches Verfahren wird aber auch benötigt, um außer Kontrolle geratene gewollte radikalische Polymerisationen unmittelbar stoppen zu können.

Aufgabe der vorliegenden Erfindung war es daher, ein solches Verfahren in möglichst vorteilhafter und möglichst breit anwendbarer Weise zur Verfügung zu stellen.

Demgemäß wurde ein Verfahren zur Sofortbeendigung von radikalischen Polymerisationen durch Zusatz einer Phenothiazin enthaltenden Inhibitorlösung zum radikalisch polymerisierenden System gefunden, das dadurch gekennzeichnet ist, daß das Lösungsmittel der Inhibitorlösung zu wenigstens 50 % seines Gewichtes aus einem N-Alkylpyrrolidon besteht.

Die Vorteilhaftigkeit des erfindungsgemäßen Verfahrens stellt sich als Ergebnis intensiver und ausgedehnter Forschungstätigkeit wie folgt dar:
- gegenüber der Empfehlung der EP-B 64628 sowie der EP-A 200181 zur Sofortbeendigung einer radikalischen Polymerisation eine Polymerisationsinhibitorlösung auf der Grundlage von Hydrochinon oder Butylbrenzkatechin oder Abkömmlingen davon zuzusetzen, enthält die erfindungsgemäß zuzusetzende Inhibitorlösung mit Phenothiazin einen wesentlichen effizienter und breiter anwendbaren radikalischen Polymerisationsinhibitor;
- gegenüber der Empfehlung in Res. Dicl. 1989, 300, 245 (Eng.), zur Sofortbeendigung einer ungewollten radikalischen Polymerisation von Acrylsäure eine wäßrige Cu(II)-Salz-Lösung zuzusetzen, sind Inhibitorlösungen auf der Grundlage von N-Alkylpyrrolidon in der Regel einerseits sowohl mit wäßrigen als auch mit nichtwäßrigen Systemen mischbar und andererseits im Nachhinein von solchen Systemen auch wieder leicht abtrennbar;
- in Process Saf. Prog. (1993), 12(2), 111-4, wird zwar empfohlen, zur Sofortbeendigung einer ungewollten radikalischen Polymerisation von Acrylsäure selbiger eine Inhibitorlösung auf der Grundlage von Phenothiazin zuzusetzen, doch enthält dieser Stand der Technik keinen Hinweis darauf, das Phenothiazin in einem hauptsächlich aus N-Alkylpyrrolidon bestehenden Lösungsmittel gelöst befindlich zuzusetzen.

Weitere Vorteile der erfindungsgemäßen Verfahrensweise bestehen darin, daß sich N-Alkylpyrrolidone gegenüber den meisten Substanzen inert verhalten. Ferner liegt der Siedepunkt von N-Alkylpyrrolidonen oberhalb des Siedepunktes der meisten Monomeren, was eine nachträgliche Trennung von den Monomeren erleichtert und eine spätere Weiterverwendung des Monomeren ermöglicht. Weiterhin verhindert der hohe Siedepunkt der N-Alkylpyrrolidone die Ausbildung explosiver Dampf-/Sauerstoffgemische in heißen Klimazonen. Auch weisen N-Alkylpyrrolidone in der Regel einen tief liegenden Schmelzpunkt auf, was auch in nordischen Ländern ihre Anwendung ermöglicht. Von Vorteil ist zusätzlich der niedrige Flammpunkt von N-Alkylpyrrolidonen sowie ihre allenfalls geringe Toxizität. Ganz besonders vorteilhaft für das erfindungsgemäße Verfahren ist jedoch, daß Phenothiazin bei Normaltemperatur (25°C) in N-Alkylpyrrolidon eine erhöhte Löslichkeit aufweist. Dies ermöglicht die erfindungsgemäße Anwendung von Phenothiazinlösungen mit erhöhtem Phenothiazingehalt ohne das Risiko, daß mit einer Änderung der Außentemperatur unmittelbar eine partielle oder vollständige Ausfällung des Phenothiazins aus der Lösung einhergeht.

Eine Zugabe von Phenothiazin in Substanz zur Sofortbeendigung von radikalischen Polymerisationen ist insofern von Nachteil, als der in Substanz gegebene geringe Zerteilungsgrad des Phenothiazins der angestrebten Sofortbeendigung nicht angemessen ist.

Erfindungsgemäß bevorzugte N-Alkylpyrrolidone sind jene, deren Alkylgruppe ein bis acht C-Atome aufweist. Besonders bevorzugt sind unter diesen diejenigen N-Alkylpyrrolidone, deren Alkylgruppe ein bis sechs C-Atome aufweist. Ganz besonders bevorzugte N-Alkylpyrrolidone sind das N-Methylpyrrolidon und das N-Ethylpyrrolidon.

Neben N-Alkylpyrrolidonen kann die erfindungsgemäß zuzusetzende Phenothiazinlösung auch noch andere Lösungsmittel enthalten. Als solche kommen alle diejenigen in Betracht, die mit N-Alkylpyrrolidonen mischbar sind. Beispielhaft genannt seien als solche Lösungsmittel Diphenyl, Diphenylether, Toluol, Xylol, Phthalsäuredimethylester, Butylacetat oder 2-Ethylhexylacetat. Ferner kommen als solche anderen Lösungsmittel N,N-Dialkylcarbonsäureamide in Betracht, deren Alkylgruppen bevorzugt ein bis acht C-Atome aufweisen. Besonders günstige Alkylgruppen sind die Methyl-, die Ethyl- und die n-Butylgruppe. Ferner sind N,N-Dialkylcarbonsäureamide von C₁- bis C₃-Alkancarbonsäuren besonders vorteilhaft. Erfindungsgemäß besonders günstige N,N-Dialkylcarbonsäureamide sind das N,N-Dimethylformamid und das N,N-Dimethylacetamid.

Bevorzugt besteht das Lösungsmittel der erfindungsgemäß zuzusetzenden Phenothiazinlösung zu wenigstens 75 % seines Gewichtes, besonders bevorzugt zu wenigstens 85 % seines Gewichtes und ganz besonders bevorzugt zu wenigstens 95 % seines Gewichtes aus N-Alkylpyrrolidon. Erfindungsgemäß zweckmäßig besteht das Lösungsmittel der Phenothiazinlösung ausschließlich aus N-Alkyl-pyrrolidon, insbesondere ausschließlich aus N-Methylpyrrolidon oder ausschließlich aus N-Ethylpyrrolidon.

Neben Phenothiazin kann die erfindungsgemäß zuzusetzende Inhibitorlösung auch noch andere Polymerisationsinhibitoren enthalten. Als solche seien beispielhaft aufgeführt Hydrochinon, Diphenylamin, p-Phenylendiamine, Nitroxyl-Radikale (Verbindungen, die wenigstens eine >N-O--Gruppe aufweisen), Verbindungen, die eine Nitroso-Gruppe, d.h., eine Atomgruppierung -N=O, aufweisen, und Hydroxylamine.

Als geeignete Nitroxyl-Radikale (auch als N-Oxyl-Radikale bezeichnet) kommen insbesondere diejenigen in Betracht, die sich von einem sekundären Amin ableiten, welches keine Wasserstoffatome an den α-C-Atomen trägt (d.h., die N-Oxyl-Gruppen leiten sich von entsprechenden sekundären Aminogruppen ab). Unter diesen eignen sich vor allem jene N-Oxyl-Radikale, die in der EP-A 135280, der älteren Anmeldung DE-A 19651307, der US-A 5,322,912, der US-A 5,412,047, der US-A 4,581,429, der DE-A 1618141, der CN-A 1052847, der US-A 4,670,131, der US-A 5,322,960, der älteren Anmeldung DE-A 19602539, der EP-A 765856 und der JP-A 5/320217 genannt sind.

Solche geeigneten, sich von einem sekundären Amin ableitenden, stabilen N-Oxyl-Radikale sind z.B. jene der allgemeinen Formel I 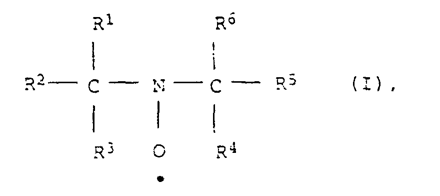 mit
- R¹,R²,R⁵ und R⁶ =: dieselben oder verschiedene gerad- oder verzweigtkettige, gegebenenfalls substituierte Alkylgruppen und
- R³ und R⁴ =: dieselben oder verschiedene gerad- oder verzweigtkettige, gegebenenfalls substituierte Alkylgruppen oder
- R³CNCR⁴ =: eine, gegebenenfalls substituierte, zyklische Struktur.

Als geeignete Verbindungen I kommen insbesondere jene in Betracht, die in der EP-A 135 280, der älteren Anmeldung DE-A 19651307, der US-A 5,322,912, der US-A 5,412,047, der US-A 4,581,429, der DE-A 16 18 141, CN-A 1052847, US-A 4,670,131, US-A 5,322,960 sowie der älteren Anmeldung DE-A 19602539 genannt sind.

Beispiele dafür sind jene stabilen N-Oxyl-Radikale der allgemeinen Formel I, bei welchen R¹, R², R⁵ und R⁶ für (gleiche oder verschiedene) C₁- bis C₄-Alkylgruppen wie Methyl-, Ethyl-, n-Propyl-, iso-Propyl-, n-Butyl-, iso-Butyl- oder tert.-Butyl-, lineares oder verzweigtes Pentyl-, Phenyl- oder substituierte Gruppen hiervon und R³ und R⁴ für (gleiche oder verschiedene) C₁- bis C₄-Alkylgruppen wie Methyl-, Ethyl-, n-Propyl-, iso-Propyl-, n-Butyl-, iso-Butyl- oder tert.-Butyl-, lineares oder verzweigtes Pentyl-, substituierte Gruppen hiervon oder gemeinsam mit CNC die zyklische Struktur 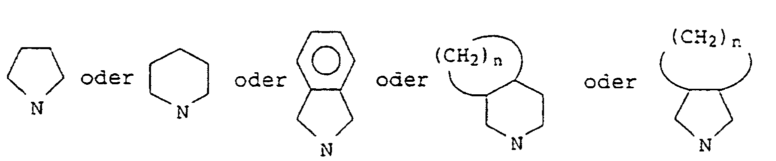 mit n gleich einer ganzen Zahl von 1 bis 10 (häufig 1 bis 6), einschließlich substituierter derartiger zyklischer Strukturen, stehen. Als beispielhafte Vertreter seien 2,2,6,6-Tetramethyl-1-oxyl-piperidin, 2,2,5,5-Tetramethyl-2-oxyl-pyrrolidin und 4-Oxo-2,2,6,6-tetramethyl-1-oxyl-piperidin genannt.

Die N-Oxyl-Radikale I lassen sich aus den entsprechenden sekundären Aminen durch Oxidation, z.B. mit Wasserstoffperoxid, herstellen. In der Regel sind sie als Reinsubstanz darstellbar.

Zu den geeigneten N-Oxyl-Radikalen I zählen insbesondere piperidin- oder pyrrolidin-N-Oxyle und Di-N-Oxyle der nachstehenden allgemeinen Formeln II bis IX: 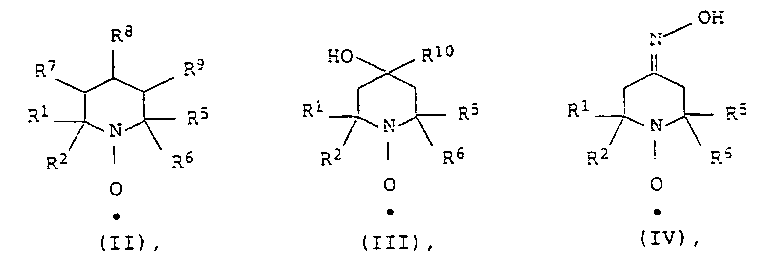 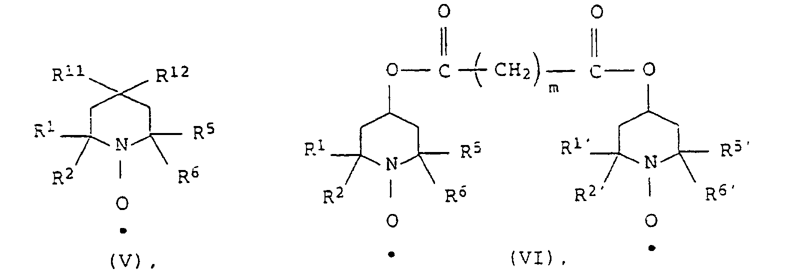 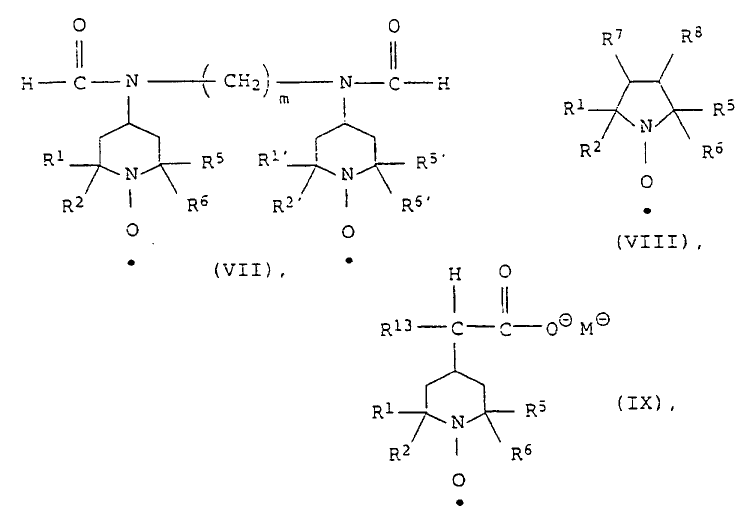 mit
- m =: 2 bis 10,
- R⁷,R⁸,R⁹ =: unabhängig voneinander

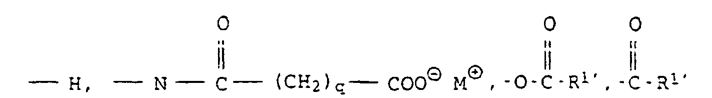

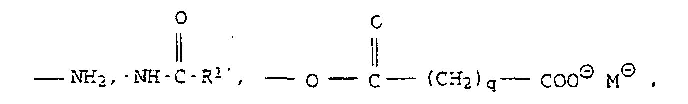

― COO^{⊖} M^{⊖} , ― SO₃^{⊖} M^{⊕} , ― PO₃^{⊖} M^{⊕} ,

― O ― PO^{2⊖}₃M^{⊕}₂ , ― O ― SO₃^{⊖} M^{⊕} , ― OH,

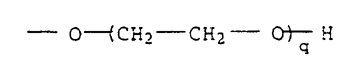

oder 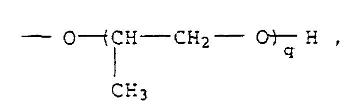
- M^{⊕}=: ein Wasserstoff- oder ein Alkalimetallion,
- q =: eine ganze Zahl von 1 bis 10,
- R¹',R²',R⁵',R⁶' =: unabhängig voneinander und unabhängig von R¹, R², R⁵, R⁶ dieselben Gruppen wie R¹,
- R¹⁰ =: C₁- bis C₄-Alkyl, -CH=CH₂, -C≡CH, -CN, 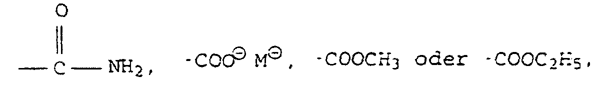
- R¹¹ =: ein organischer Rest, der wenigstens eine primäre, sekundäre (z.B. -NHR¹) oder tertiäre Aminogruppe (z.B. -NR¹R²) oder wenigstens eine Ammoniumgruppe -N^{⊕}R¹⁴R¹⁵R¹⁶X^{⊖} aufweist, mit X^{⊖} = F^{⊖}, Cl^{⊖}, Br^{⊖}, HSO₄^{⊖}, SO₄^{2⊖}, H₂PO₄^{⊖}, HPO₄^{2⊖} oder PO₄^{3⊖} und R¹⁴, R¹⁵, R¹⁶ voneinander unabhängige organische Reste (z.B. unabhängig voneinander und unabhängig von R¹ dieselben Gruppen wie R¹),
- R¹² =: unabhängig von R¹¹ dieselben Gruppen wie R¹¹ oder - H, -OH, C₁- bis C₄-Alkyl, -COO^{⊖}M^{⊕}, -C≡CH, 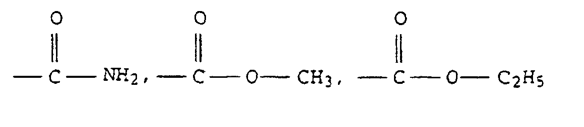 oder hydroxysubstituiertes C₁- bis C₄-Alkyl (z.B hydroxyethyl oder hydroxypropyl) oder
- R¹¹, R¹² =: gemeinsam den Sauerstoff einer Carbonylgruppe und
- R¹³ =: 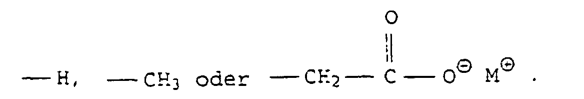
Vorzugsweise ist R¹ = R² = R⁵ = R⁶ = R^{1'} = R^{2'} = R^{5'} = R^{6'} = -CH₃.

Als beispielhafte Vertreter erfindungsgemäß geeigneter N-Oxyl-Radikale seien 4-Hydroxy-2,2,6,6-tetramethyl-1-oxyl-piperidin, 4-Hydroxy-2,6-diphenyl-2,6-dimethyl-1-oxyl-piperidin, 4-Carboxy-2,2,6,6-tetramethyl-1-oxyl-piperidin, 4-Carboxy-2,6-diphenyl-2,6-dimethyl-1-oxyl-piperidin, 3-Carboxy-2,2,5,5-tetramethyl-1-oxyl-pyrrolidin, 3-Carboxy-2,5-diphenyl-2,5-dimethyl-1-oxyl-pyrrolidin, 4-Acetyl-2,2,6,6-tetramethyl-1-oxyl-piperidin, N,N'-Bis (1-Oxyl-2,2,6,6-tetramethylpiperidin-4-yl)-N,N'-bis formyl-1,6-diaminohexan und Bis-(1-oxyl-2,2,6,6-tetramethylpiperidin-4-yl)adipat genannt.

Die Herstellung von 3-Carboxy-2,2,5,5-tetramethyl-1-oxylpyrrolidin findet sich z.B. in Romanelli, M.; Ottaviani, M.F.; Martini, G.; Kevan, L., JPCH J: Phys. Chem., EN, 93, 1, 1989, S. 317 - 322.

Die Verbindungen (VI) und (VII) können gemäß US-A 4665185 (z.B. Bsp. 7) sowie DE-A 19510184 erhalten werden.

Weitere geeignete beispielhafte Vertreter sind:

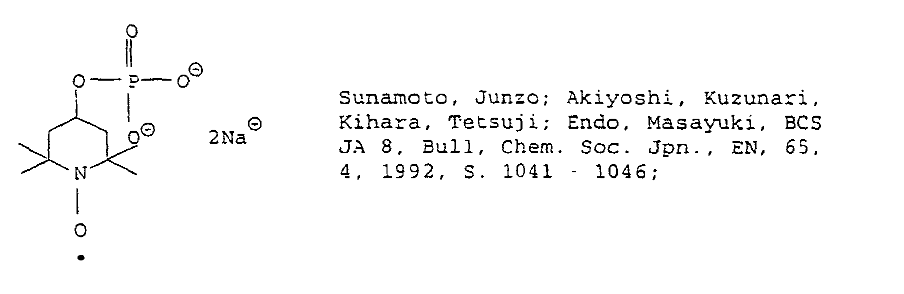

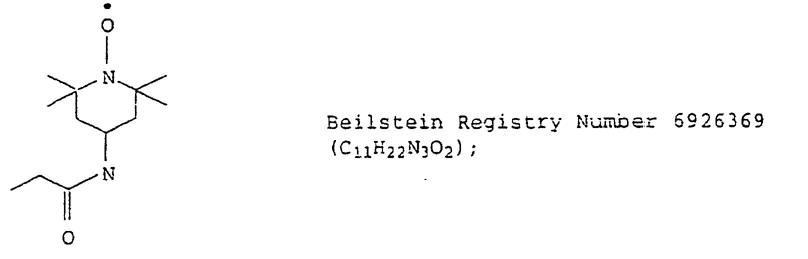

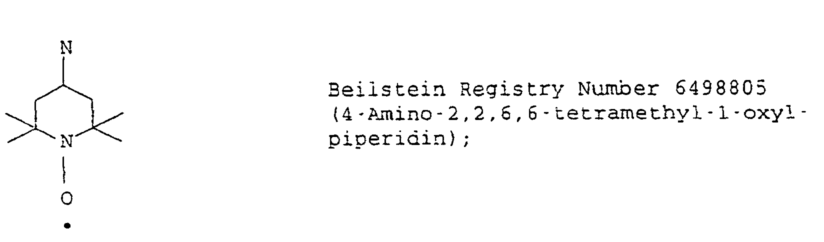

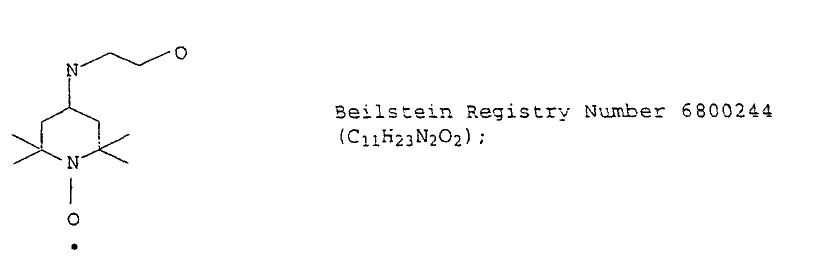

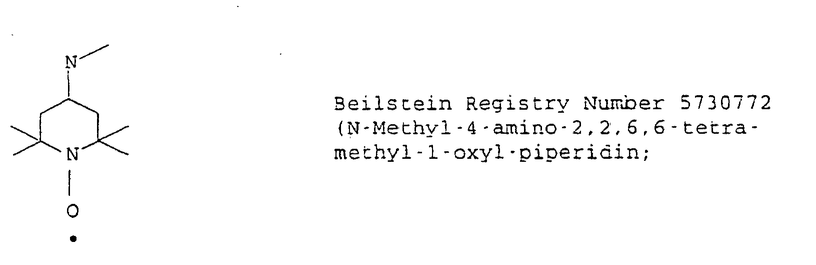

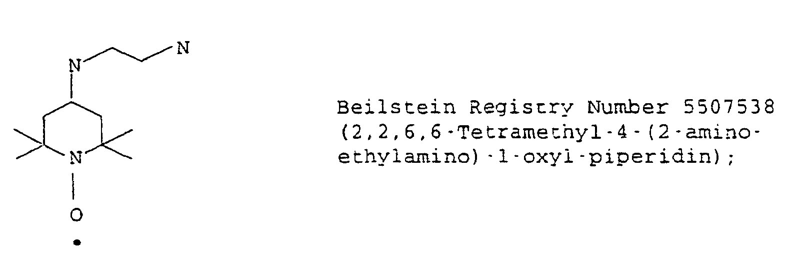

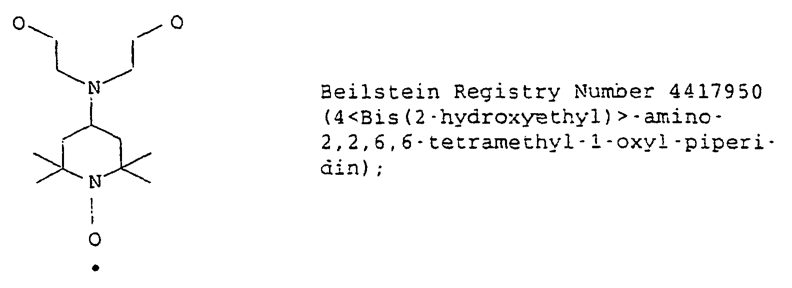

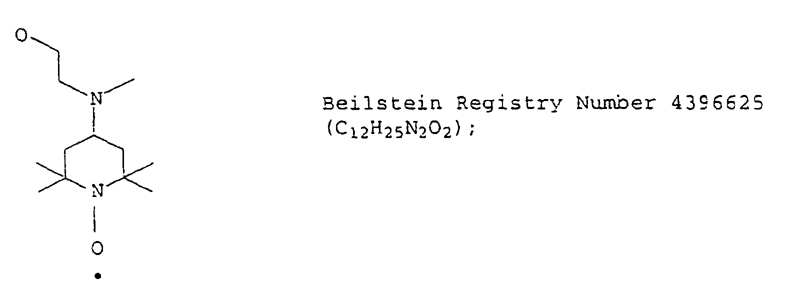

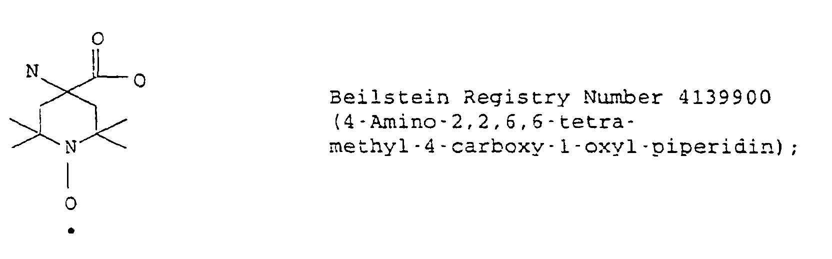

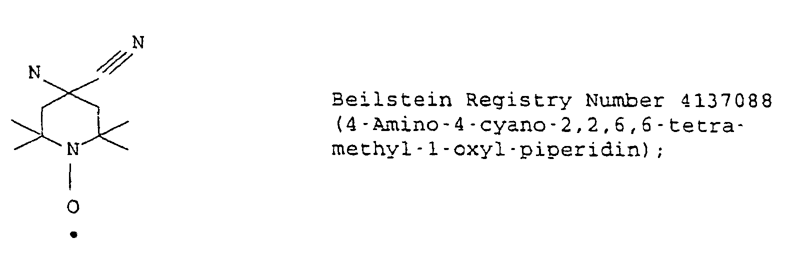

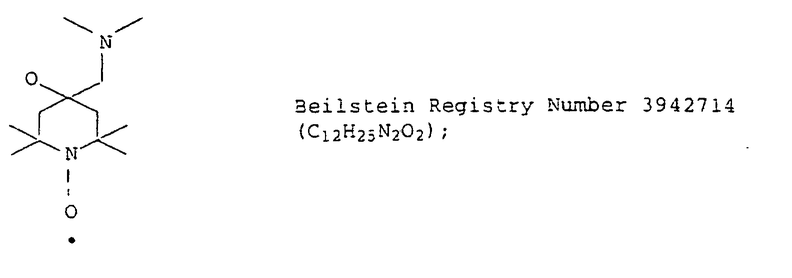

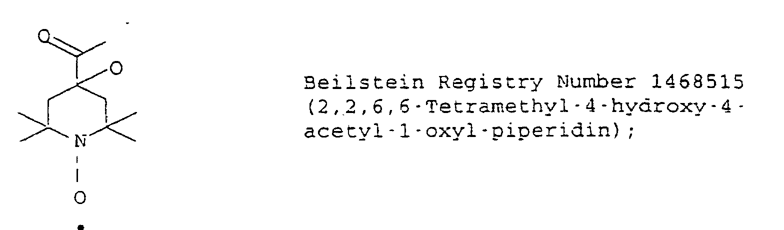

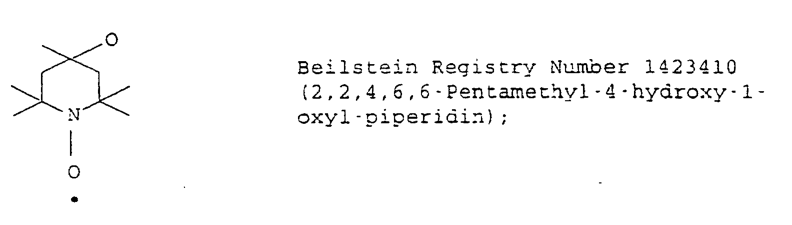

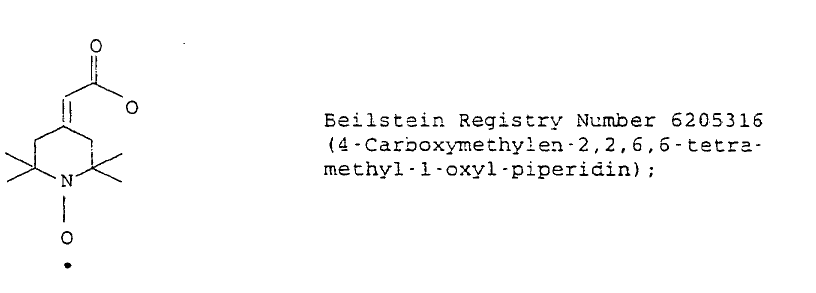

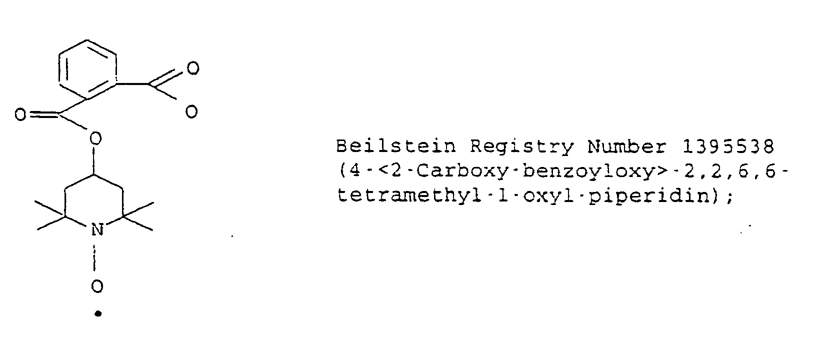

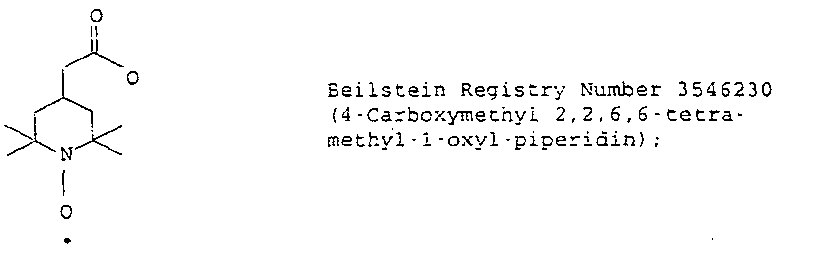

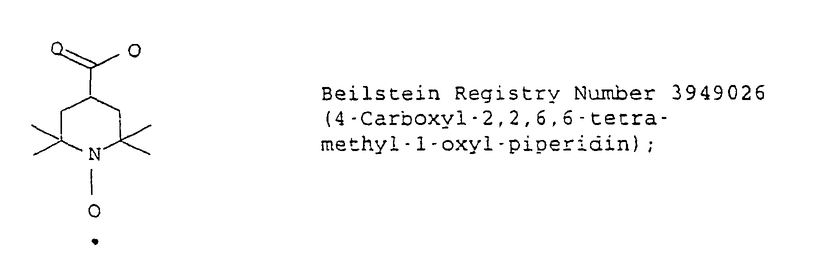

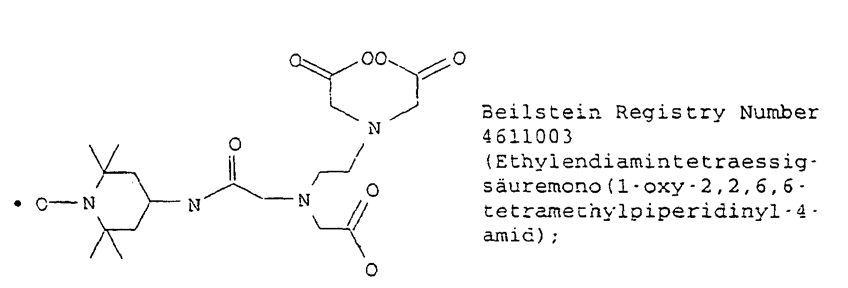

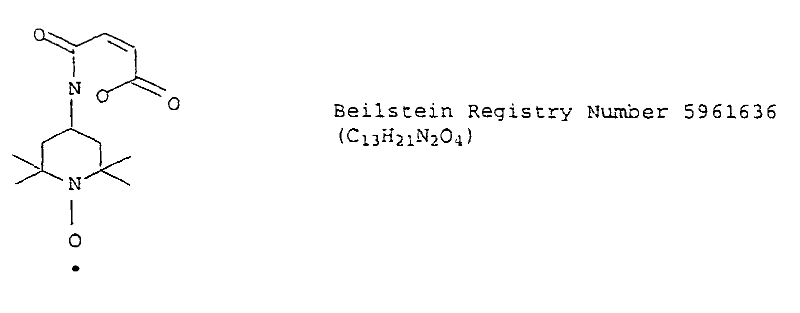

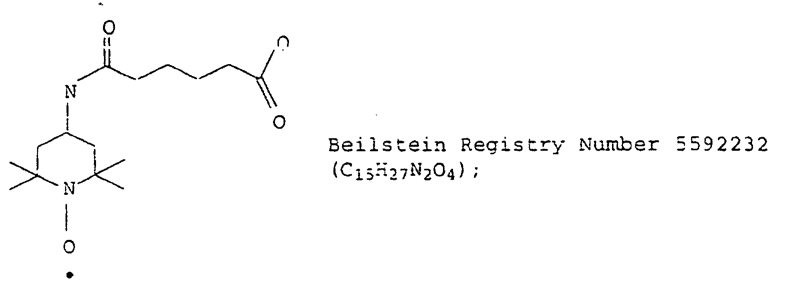

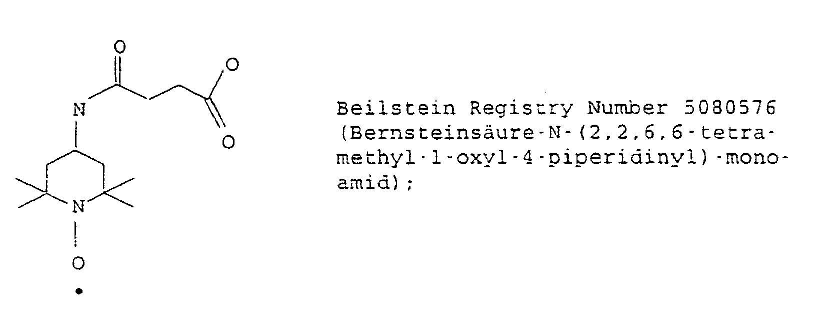

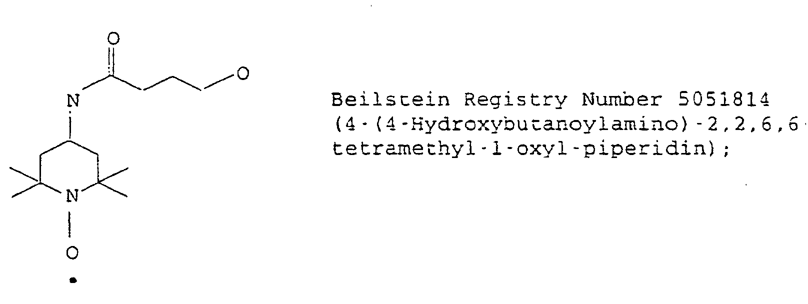

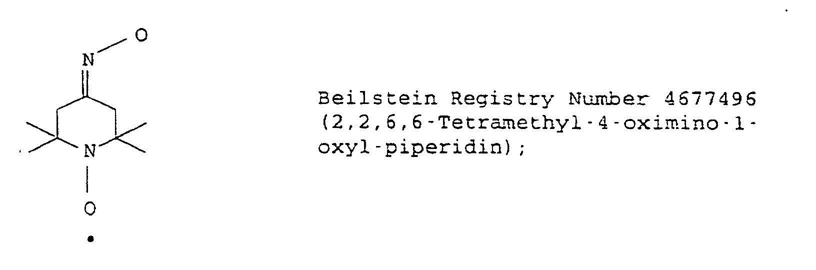

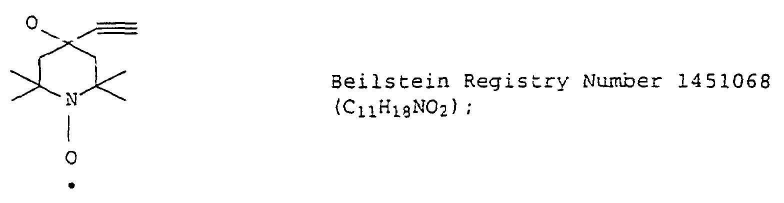

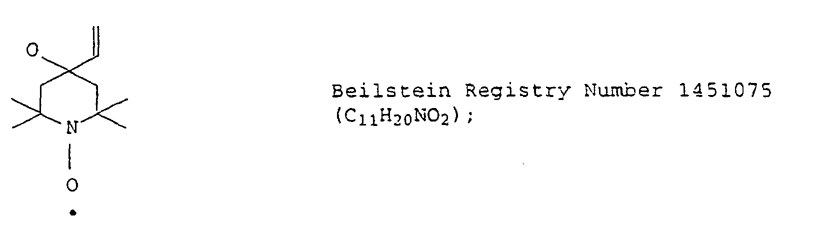

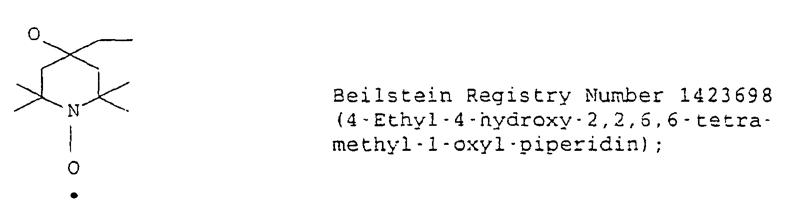

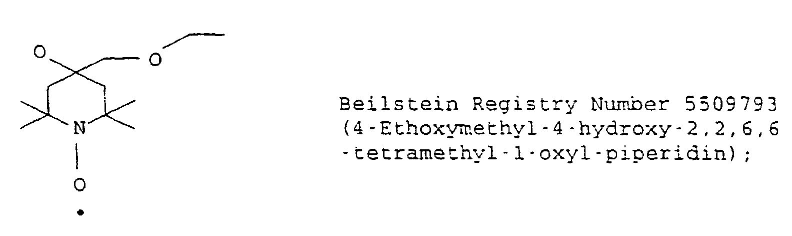

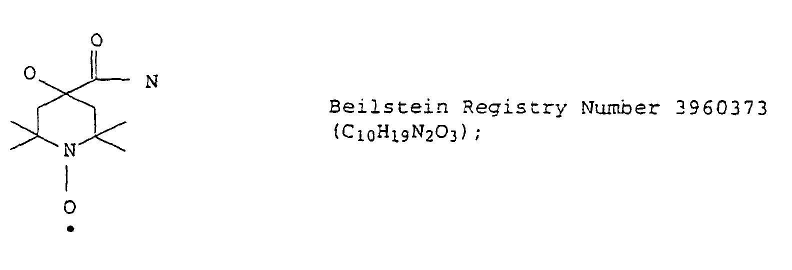

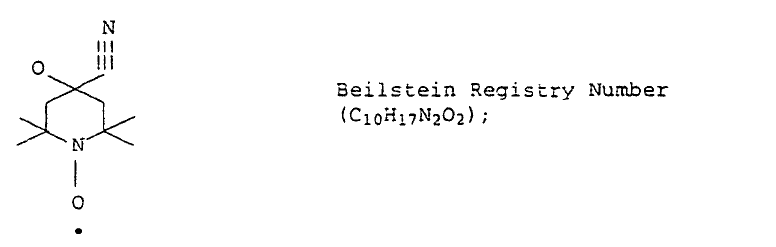

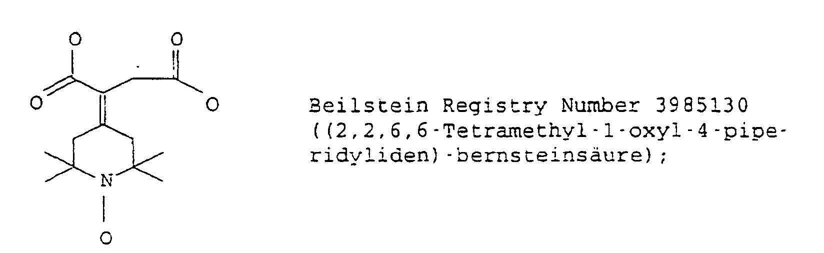

Selbstverständlich können erfindungsgemäß auch Gemische von N-Oxyl-Radikalen neben Phenothiazin angewendet werden.

Geeignete organische Nitrosoverbindungen sind z.B. N-Nitrosoarylamine oder die Nitrosogruppe unmittelbar an ein Kohlenstoffatom eines aromatischen Kerns gebunden aufweisende Nitrosoverbindungen. Beispielhaft genannt seien Nitrosophenole wie 4-Nitrosophenol, Nitrosonaphthole wie 2-Nitroso-1-naphthol, Nitrosobenzol, N-Nitroso-N-methylharnstoff, Nitroso-N,N-Dialkylaniline mit Alkyl = Methyl, Ethyl, Propyl und/oder Butyl, N-Nitrosodiphenylamin, N-Nitrosophenylnaphthylamin, 4-Nitroso-0 dinaphthylamin und p-Nitrosodiphenylamin. Selbstverständlich können erfindungsgemäß auch Gemische von vorgenannten Nitrosoverbindungen neben Phenothiazin eingesetzt werden.

Geeignete p-Phenylendiamine sind solche der all-gemeine Formel X 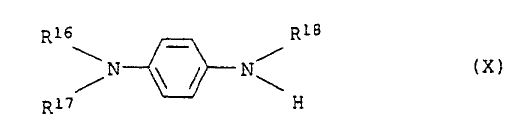 mit
- R¹⁶, R¹⁷, R¹⁸=: unabhängig voneinander Alkyl, Aryl, Alkaryl oder Aralkyl mit bis zu 20 C-Atomen, oder Wasserstoff.

Insbesondere eignen sich Verbindungen X mit R¹⁶, R¹⁷, R¹⁸= unabhängig voneinander Methyl, Ethyl, Propyl, iso-Propyl, iso-Butyl, sek.-Butyl, n-Butyl, Pentyl, Phenyl oder Naphthyl. Als Beispiele für geeignete Verbindungen X seien genannt: N,N'-Bis-sek.butylp-phenylendiamin, N-Phenyl-N'-isopropyl-phenylendiamin, N-Naphthyl-N'-sek-butyl-p-phenylendiamin, N,N,N'-Trimethylp-phenylendiamin, N,N,N' -Triethyl-p-phenylendiamin, N,N-Dimethyl-p-phenylendiamin, N,N-Diethyl-p-phenylendiamin, N-Phenyl-N',N'-dimethyl-p-phenylendiamin, N-Phenyl-N',N'-diethyl-pphenylendiamin, N-Phenyl-N',N'-dipropyl-p-phenylendiamin, N-Phenyl-N',N'-di-n-butyl-p-phenylendiamin, N-Phenyl-N',N'-disek.-butyl-p-phenylendiamin, N-Phenyl-N'-methyl-N'-ethyl-pphenylendiamin, N-Phenyl-N'-methyl-N'-propyl-p-phenylendiamin, N-Phenyl-N'-methyl-p-phenylendiamin, N-Phenyl-N'-ethyl-pphenylendiamin, N-Phenyl-N'-propyl-p-phenylendiamin, N-Phenyl-N'isoprogyl-p-phenylendiamin, N-Phenyl-N'-butyl-p-phenylendiamin, N-Phenyl-N'-isobutyl-p-phenylendiamin, N-Phenyl-N'-sek-butylp-phenylendiamin, N-Phenyl-N'-tert.-butyl-p-phenylendiamin, N-Phenyl-N'-n-pentyl-p-phenylendiamin, N-Phenyl-N'-n-hexylp-phenylendiamin, N-Phenyl-N'-(1-methylhexyl)-p-phenylendiamin, N-Phenyl-N'-(1,3-dimethylbutyl)-p-phenylendiamin, N-Phenyl-N'-(1,4-dimethylpentyl)-p-phenylendiamin und p-Phenylendiamin. Selbstverständlich können erfindungsgemäß auch Gemische von p-Phenylendiaminen neben Phenothiazin eingesetzt werden. Als solche Gemische kommen insbesondere die in der WO 92/01665 empfohlenen p-Phenylendiamingemische in Betracht.

Natürlich können auch Gemische aller verschiedenen vorgenannten Polymerisationsinhibitoren neben Phenothiazin eingesetzt werden.

Erfindungsgemäß bevorzugt sind solche Phenothiazinlösungen, deren Gesamtgehalt an Polymerisationsinhibitor zu wenigstens 50 Gew.-%, besonders bevorzugt zu wenigstens 75 Gew.-% und ganz besonders bevorzugt zu wenigstens 90 Gew.-% aus Phenothiazin besteht. Mit besonderem Vorteil ist neben Phenothiazin kein weiterer Polymerisationsinhibitor in der erfindungsgemäß zuzusetzenden Inhibitorlösung enthalten.
In der Regel wird der Gehalt an Phencthiazin in den erfindungsgemäß zuzusetzenden Inhibitorlösungen, bezogen auf die Lösung, wenigstens 10 Gew.-%, vorzugsweise wenigstens 20 Gew.-%, besonders bevorzugt wenigstens 30 Gew.-%, betragen. Häufig wird der auf die Lösung bezogene Phenothiazingehalt 35 bis 45 Gew.-% betragen. In der Regel wird der wie vorstehend bezogene Pheno-5 thiazingehalt der erfindungsgemäß zuzusetzenden Lösung bereits aus Viskositätsgründen nicht oberhalb von 60 Gew.-% liegen.

Mit Vorteil wird erfindungsgemäß eine Lösung von Phenothiazin in Methylpyrrolidon bevorzugt, deren Gehalt an Phenothiazin zweckmäßigerweise, auf die Lösung bezogen, 35 bis 50 oder 40 bis 50 Gew.-% beträgt. Häufig wird der Phenothiazingehalt der vorgenannten Lösung 45 Gew.-% betragen.

Das erfindungsgemäße Verfahren eignet sich zur Sofortbeendigung jedweder Art radikalischer Polymerisationen, insbesondere derjenigen ungewollten und/oder außer Kontrolle geratenen radikalischen Polymerisationen, die eingangs dieser Schrift genannt wurden.

Zu diesen sind vor allem die ungewollten radikalischen Polymerisationen von solchen Substanzen zu zählen, die zu wenigstens 95 Gew.-% oder zu wenigstens 98 Gew.-% oder zu wenigstens 99 Gew.-% oder zu 100 Gew.-% aus (Meth)acrylmonomeren bestehen. Als (Meth)acrylmonomere kommen dabei vor allem (Meth)acrylsäure und Ester aus (Meth)acrylsäure und ein- oder mehrwertigen Alkanolen in Betracht. Dies gilt insbesondere dann, wenn die einoder mehrwertigen Alkanole ein bis zwanzig C-Atome, oder ein bis zwölf C-Atome oder ein bis acht C-Atome aufweisen. Beispielhafte Vertreter solcher Ester sind z.B. Methylacrylat, Ethylacrylat, n-Butylacrylat, iso-Butylacrylat, tert.-Butylacrylat, 2-Ethylhexylacrylat, Methylmethacrylat, Ethylmethacrylat, n-Butylmethacrylat und tert.-Butylmethacrylat.
In anwendungstechnisch zweckmäßiger Weise wird das Einbringen der erfindungsgemäß zuzusetzenden Phenothiazinlösung über eine Sprühdüse vorgenommen, um eine möglichst rasche homogene Verteilung im radikalisch polymerisierenden System zu erzielen. Selbstverständlich kann vorgenannte Homogenisierung auch durch Umpumpen und/oder Rühren unterstützt werden. Allerdings bedingen solche mechanischen Hilfsmaßnahmen auch die Gefahr einer Polymerisationsbeschleunigung, da mit ihnen gleichzeitig ein Energieeintrag in das radikalisch polymerisierende System verknüpft ist. 5 Die einzubringende Phenothiazinlösung ist zweckmäßig in einem geeigneten Vorratsbehälter enthalten. Wird das erfindungsgemäße Verfahren zur Sofortbeendigung der radikalischen Polymerisation von ungewollt in Substanz polymerisierenden (Meth)acrylmonomeren angewendet, sollte die insgesamt zugesetzte Menge an Phenothiazin, bezogen auf die (Meth)acrylmonomeren, etwa 0,01 bis 3 Gew.-% betragen. In der Regel genügt eine zugesetzte Menge an Phenothiazin von 0,01 bis 0,05, häufig 0,025, Gew.-%.

### Beispiele

### Beispiel 1

In ein gerührtes Gefäß von 1 Liter Innenvolumen, das in ein auf 100°C beheiztes Ölbad eintauchte, wurden 500 ml mit 10 Gew.-ppm MEHQ stabilisiertes 2-Ethylhexylacrylat unter Stickstoff eingebracht. Das Rührgefäß war über ein Ventil mit einem 50-ml-Vorratsgefäß verbunden, das 10 ml einer 40 gew.-%igen Lösung von Phenothiazin in N-Methylpyrrolidon enthielt und unter einem Überdruck von 9,5 bar stand. Über einen in das Rührgefäß eintauchenden Temperaturfühler wurde ein zwischen Rührgefäß und Vorratsgefäß angebrachtes Ventil gesteuert. Die Steuerung war so eingestellt, daß bei Überschreiten von 105°C im Rührgefäß das Ventil automacisch geöffnet, die im Vorratsgefäß befindliche Phenothiazinlösung ins Rührgefäß gedrückt und gleichzeitig die Beheizung unterbrochen wurde. Die Auslösung der Ventilsteuerung erfolgte 75 h nachdem das 2-Ethylhexylacrylat in das Rührgefäß eingebracht worden war. Die beginnende Polymerisation des 2-Ethylhexylacrylats wurde sofort gestoppt. Der Inhalt des Rührgefäßes blieb dünnflüssig und konnte mühelos vollständig entleert werden.

### Vergleichsbeispiel

Es wurde wie in Beispiel 1 verfahren, das Vorratsgefäß enthielt jedoch lediglich 10 ml N-Methylpyrrolidon. Die Auslösung der Ventilsteuerung erfolgte 81 h nachdem das 2-Ethylhexylacrylat in das Rührgefäß eingebracht worden war. Innerhalb von 0,7 h war das 2-Ethylhexylacrylat zu einer hochviskosen Masse polymerisiert.

### Beispiel 2

Nachfolgende Tabelle weist die Ergebnisse von Untersuchungen der 5 Löslichkeit von Phenothiazin in verschiedenen Lösungsmitteln bei 25°C aus.

**Tabelle**

| Lösungsmittel | Löslichkeit (Gew.-%) |
|---|---|
| N-Methylpyrrolidon | > 20 |
| N-Ethylpyrrolidon | > 20 |
| Diphenyl | < 20 |
| Toluol | < 20 |
| Xylol | < 20 |
| n-Butylacetat | < 20 |
| 2-Ethylhexylacetat | < 20 |
| Phthalsäuredimethylester | < 20 |

## Patentansprüche

1. Verfahren zur Sofortbeendigung von radikalischen Polymerisationen, umfassend den Zusatz einer Phenothiazin enthaltenden Inhibitorlösung zu einem radikalisch polymerisierenden System, **dadurch gekennzeichnet, daß** das Lösungsmittel der Inhibitorlösung zu wenigstens 50 % seines Gewichtes aus einem N-Alkylpyrrolidon besteht.

2. Verfahren nach Anspruch 1, **dadurch gekennzeichnet, daß** das N-Alkylpyrrolidon N-Methylpyrrolidon und/oder N-Ethylpyrrolidon ist.

3. Verfahren nach Anspruch 1 oder 2, **dadurch gekennzeichnet, daß** der Phenothiazingehalt der Inhibitorlösung, bezogen auf das Gewicht der Inhibitorlösung, wenigstens 10 Gew.-% beträgt.

4. Verfahren nach einem der Ansprüche 1 bis 3, **dadurch gekennzeichnet, daß** es sich bei dem radikalisch polymerisierenden System um in Substanz radikalisch polymerisierende (Meth)acrylmonomere handelt.

5. Verfahren nach Anspruch 4, **dadurch gekennzeichnet, daß** das (Meth)acrylmonomere (Meth)acrylsäure ist.

6. Verfahren nach Anspruch 4, **dadurch gekennzeichnet, daß** das (Meth)acrylmonomere ein (Meth)acrylsäureester ist.

7. Inhibitorlösung, enthaltend Phenothiazin und ein Lösungsmittel, das zu wenigstens 50 % seines Gewichtes aus einem N-Alkylpyrrolidon besteht.

8. Lösung nach Anspruch 7, enthaltend Phenothiazin und N-Methylpyrrolidon.

## Claims

1. A process for immediately terminating free radical polymerizations, which comprises adding a phenothiazine-containing inhibitor solution to a system undergoing free radical polymerization, wherein the solvent of the inhibitor solution comprises at least 50% of its weight of an N-alkylpyrrolidone.

2. A process as claimed in claim 1, wherein the N-alkylpyrrolidone is N-methylpyrrolidone or N-ethylpyrrolidone.

3. A process as claimed in claim 1 or 2, wherein the phenothiazine content of the inhibitor solution is at least 10% by weight, based on the weight of the inhibitor solution.

4. A process as claimed in any of claims 1 to 3, wherein the system undergoing free radical polymerization comprises (meth)acrylic monomers undergoing free radical mass polymerization.

5. A process as claimed in claim 4, wherein the (meth)acrylic monomer is (meth)acrylic acid.

6. A process as claimed in claim 4, wherein the (meth)acrylic monomer is a (meth)acrylic ester.

7. An inhibitor solution containing phenothiazine and a solvent which comprises at least 50% of its weight of an N-alkylpyrrolidone.

8. A solution as claimed in claim 7, containing phenothiazine and N-methylpyrrolidone.

## Revendications

1. Procédé pour terminer instantanément des polymérisations radicalaires comprenant l'addition au système de polymérisation radicalaire d'une solution d'inhibiteur contenant de la phénothiazine, **caractérisé en ce que** le solvant de la solution d'inhibiteur est constitué à au moins 50% de son poids d'une N-alkylpyrrolidone.

2. Procédé selon la revendication 1, **caractérisé en ce que** la N-alkylpyrrolidone est de la N-méthylpyrrolidone ou de la N-éthylpyrrolidone.

3. Procédé selon la revendication 1 ou 2, **caractérisé en ce que** la teneur en phénothiazine de la solution d'inhibiteur, par rapport au poids de la solution d'inhibiteur, est d'au moins 10% en poids.

4. Procédé selon l'une quelconque des revendications 1 à 3, **caractérisé en ce** le système de polymérisation radicalaire comprend des monomères (méth)acryliques polymérisant dans la masse par voie radicalaire.

5. Procédé selon la revendication 4, **caractérisé en ce que** le monomère (méth)acrylique est de l'acide (méth)acrylique.

6. Procédé selon la revendication 4, **caractérisé en ce que** le monomère (méth)acrylique est un ester d'acide (méth)acrylique.

7. Solution d'inhibiteur contenant de la phénothiazine et un solvant, constitué à au moins 50% de son poids d'une N-alkylpyrrolidone.

8. Solution selon la revendication 7, contenant de la phénothiazine et de la N-méthypyrrolidone.
